# EUROPÄISCHE PATENTANMELDUNG

(11) **EP 2 810 824 A1**
(43) Veröffentlichungstag der Anmeldung: **10.12.2014**
(21) Anmeldenummer: 14168149.4
(22) Anmeldetag: 13.05.2014
(51) Int. Cl.: B60P 3/20, B60H 1/24

(54) **Einrichtung zur Vergleichmäßigung der Temperaturverteilung in einem geschlossenen Laderaum eines Transportfahrzeugs sowie Transportfahrzeug mit einer solchen Einrichtung**

(30) Priorität: 03.06.2013 DE 202013004990 U; 04.06.2013 DE 202013005047 U
(71) Anmelder: Grueneberg, Claus, 65779 Kelkheim (DE)
(72) Erfinder: Grueneberg, Claus, 65779 Kelkheim (DE)
(74) Vertreter: Strobel, Wolfgang

(57) **Zusammenfassung**

Die vorliegende Erfindung betrifft eine Einrichtung zur Vergleichmäßigung der Temperaturverteilung in einem geschlossenen Laderaum (35) eines Kraft- bzw. Transportfahrzeugs (31), welches zum Transport von Gütern dient, die in einem frei gewählten und/oder vorbestimmten konstanten Temperaturbereich, der einen maximalen Bereich von im Wesentlichen +2°C bis +30°C umfasst, transportiert werden sollen oder müssen. Sie zeichnet sich dadurch aus, dass sie die Form einer Radkastenverkleidung (1) für einen sich im Laderaum (35) des Kraft- bzw. Transportfahrzeugs (31) befindlichen Radkasten aufweist, die eine Seitenwand (3), eine obere Abdeckwand (5), eine vordere Stirnwand (7) und eine hintere Stirnwand (9), wenigstens eine Lufteintrittsöffnung (11) und wenigstens eine Luftaustrittsöffnung (15), und wenigstens einen Lüfter oder Ventilator (17) aufweist, der sich in oder an der Luftaustrittsöffnung /15) befindet und zur Umwälzung der Luft im Laderaum dient.

## Beschreibung

Die vorliegende Erfindung betrifft eine Einrichtung zur Vergleichmäßigung der Temperaturverteilung in einem geschlossenen Laderaum eines Kraftfahrzeugs, welches zum Transport von Gütern dient, die in einem frei gewählten und/oder vorbestimmten konstanten Temperaturbereich, der einen maximalen Bereich von im Wesentlichen +5°C bis +30°C umfasst, transportiert werden sollen oder müssen.

Weiterhin betrifft die vorliegende Erfindung ein Transportfahrzeug mit einer solchen Einrichtung.

Der Transport bestimmter Güter, wie Arzneimittel, Lebensmittel, wie insbesondere Schokolade und Pralinen, Kosmetika oder Pflanzen, oder elektronische Bauteile, etc. erfordert einen bestimmten Temperaturbereich, der während des Transports der Güter eingehalten werden muss oder soll, wobei es unterschiedliche Temperaturbereiche gibt. Solche Temperaturbereiche sind beispielsweise der Tiefkühlbereich, der für tiefgekühlte Lebensmittel eingehalten werden muss, oder auch ein Bereich, in dem Kühlkost transportiert wird.

Gemäß einer im März 2013 veröffentlichten und im September 2013 in Kraft getretenen Richtlinie der Europäischen Union für die Vertriebspraxis von Humanarzneimitteln müssen Arzneimittel während des gesamten Transportes innerhalb der vom Hersteller auf der äußeren Hülle angegebenen Temperaturgrenzen gehalten werden. Konkret bedeutet dies, dass die erforderlichen Lagerbedingungen für Arzneimittel während des gesamten Transports des Arzneimittels ohne Unterbrechung in diesem Temperaturbereich vorherrschen müssen. Folgende Temperaturbereiche werden unterschieden:
- "Tiefgekühlt": unterhalb von -15°C;
- "Kühlschrank": zwischen +2° und +8°C;
- "Kalt oder Kühl": zwischen +8° und +15°C;
- "Raumtemperatur": zwischen +15° und +25°C.

Die vorliegende Erfindung soll für einen maximalen Temperaturbereich von +2°C bis +30°C geeignet sein, was die Temperaturbereiche "Raumtemperatur", d. h. dass sich das transportierte Gut in einem Temperaturbereich von zwischen +15° und +25°C befinden muss und "Kalt oder Kühl" zwischen +8° und +15°C sowie "Kühlschrank" zwischen +2° und +8°C umfasst. In jedem Fall liegt die untere Grenze des Temperaturbereichs über 0°C.

Maßgeblich sind gemäß Richtlinie die Faktoren: Temperatur am Produkt, maximale bzw. minimale Außentemperatur (in Deutschland statistische Werte von -20°C bis zu +40°C) sowie das Volumen des Laderaums.

Neben Arzneimitteln ist die vorliegende Erfindung für eine Reihe weiterer Güter geeignet, wie beispielsweise Lebensmittel, wie insbesondere Schokolade und Pralinen, oder Kosmetika oder Blumen. Auch temperatursensible Elektronik fällt in den Anwendungsbereich. Grundsätzlich eignet sich die vorliegende Erfindung für alle Güter, die in dem Temperaturbereich von +2°C und +30°C transportiert werden müssen oder sollen, welcher die drei oben angegebenen Temperaturbereiche von zusammen +2°C bis +25°C umfasst, um einerseits bestimmte Normen zu erfüllen und andererseits Qualitätseinbußen oder Beschädigungen bei zu hohen oder zu tiefen Temperaturen zu vermeiden.

Als Transportmittel dienen Kraftfahrzeuge, die einen geschlossenen Laderaum aufweisen, der in der Regel sowohl von der Rückseite des Fahrzeugs als auch gegebenenfalls seitlich durch entsprechende Türen erreichbar bzw. begehbar ist, zum Be- und Entladen der Transportgüter. Dieser Laderaum wird durch die Karosserie und/oder einen Aufbau, z. B. einen Kastenaufbau, gebildet. Derartige Fahrzeuge besitzen im Bereich des Laderaums bzw. des Kastenaufbaus in der Regel zwei Radkästen oder Radhäuser für die Hinterräder.

Derartige Transportfahrzeuge können mit einer Kälte- und Wärmeanlage mit elektronischer Temperaturregelung beispielsweise einer Klimaanlage zum Kühlen und einer Heizung zum Erwärmen ausgestattet sein, die, geregelt durch Erfassung der Temperatur im Laderaum, eine entsprechende Temperierung der Luft im Laderaum vornehmen können. Befindet sich die Temperatur im Laderaum auf einem zu hohen Wert, beispielsweise im Sommer, wird die Luft gekühlt, wohingegen bei sehr niedrigen Temperaturen, beispielsweise im Winter bei Temperaturen unter 0°C, eine entsprechende Erwärmung der Laderaumluft notwendig ist.

Mittels einer Luft-Temperiereinrichtung mit ventilierender Funktion bzw. einem Kühl-Wärme-Ventilationssystem, die bzw. das ein Bestandteil der Kälte- und Wärmeanlage ist, wird die entsprechend temperierte Luft in den Laderaum eingeblasen, wobei insbesondere bei gefülltem Laderaum nur eine unzureichende Verteilung der temperierten Luft erfolgt. Es können sich "Windschatten" und Bereiche im Laderaum ergeben, die von der temperierten Luft nicht erreicht werden, so dass sich unterschiedliche unkontrollierte Temperaturzonen einstellen können, die einen in einem bestimmten Temperaturbereich gesicherten Transport aller im Laderaum befindlicher Transportgüter nicht gewährleistet.

Zudem können sich kurzzeitig erhebliche Temperaturunterschiede in unterschiedlichen Zonen des Laderaums dadurch einstellen, dass beim wiederholten Beladen und Entladen, beispielsweise beim Verteilen von Arzneimitteln zu den einzelnen Apotheken, durch Öffnen der großflächigen Türen schlagartig Umgebungsluft eindringt, deren Temperatur gegebenenfalls weit außerhalb des im Laderaum eingestellten Temperaturbereichs liegt. Man kann sich leicht vorstellen, welche nachteiligen Effekte bei großer Sommerhitze oder strengem Frost entstehen können.

Aus dem Stand der Technik sind temperaturgeführte Transporte in Tiefkühl- bzw. Thermofahrzeugen bekannt. Solche Fahrzeuge weisen aufwändige Wärmedämmeinrichtungen und entsprechend umfangreiche sehr aufwändige und viel Energie verbrauchende Kühleinrichtungen auf, wobei auch bei diesen bei stark gefülltem Laderaum eine konstante Einhaltung des vorgesehenen Temperaturbereichs im gesamten Laderaum nicht sichergestellt werden kann.

Andererseits können sich bei Fahrzeugen ohne Klimaeinrichtungen erhebliche Temperaturunterschiede durch Wärme- oder Kältenester ergeben, die einen gesicherten Transport im Raumtemperaturbereich verhindern. Dies ergibt sich besonders nachteilig, wenn die Türen des Laderaums häufig geöffnet werden müssen, wie das beispielsweise bei Auslieferungsfahrten an Apotheken der Fall ist. Für diese Zwecke sind derartige Fahrzeuge nicht geeignet.

Der vorliegenden Erfindung liegt deshalb die Aufgabe zugrunde, eine Einrichtung zur Vergleichmäßigung der Temperaturverteilung in einem geschlossenen Laderaum eine Kraftfahrzeugs zu schaffen, welches zum Transport von Gütern dient, die in einem frei wählbaren und/oder vorbestimmten im Wesentlichen konstanten Temperaturbereich, der einen maximalen Bereich von im Wesentlichen +5°C bis +30°C umfasst, transportiert werden sollen oder müssen, wobei diese Einrichtung äußerst einfach aufgebaut und damit kostengünstig sein soll und für den Einbau in den von den Kraftfahrzeugherstellern angebotenen und gelieferten Fahrzeugmodellen sowie für nachträgliche An- und Aufbauten auf und an diesen Fahrzeugen geeignet ist.

Diese Aufgabe wird durch die Merkmale des Patentanspruchs 1 gelöst.

Die vorliegende Erfindung schlägt eine Einrichtung in Form einer Radkasten- bzw. Radhausverkleidung (im folgenden Radkastenverkleidung) für einen sich im Laderaum der in Rede stehenden Kraftfahrzeuge befindlichen Radkasten vor, welche aufweist: Eine Seitenwand, eine obere Abdeckwand, eine vordere Stirnwand und eine hintere Stirnwand, wenigstens eine Lufteintrittsöffnung und wenigstens eine Luftaustrittsöffnung und wenigstens einen Lüfter oder Ventilator, der sich in oder an der Luftaustrittsöffnung befindet und zur Umwälzung der Luft im Laderaum dient. Gegebenenfalls kann die Einrichtung auch eine Bodenwand aufweisen.

Die Radkastenverkleidung weist eine Seitenwand auf, die entlang der Fahrzeugachse angeordnet ist, wobei die für einen Kasten notwendige zweite Seitenwand durch die Innenseite der Fahrzeugseitenwand gebildet wird, die entweder durch die Karosserie oder eine Seitenwandverkleidung gebildet wird. Die obere Abdeckwand deckt die Radkastenverkleidung auf der Oberseite ab, wobei der Boden des Fahrzeugs bestehend aus der Karosserie oder einem zusätzlichen Laderaumboden, die gegenüberliegende Abdeckung bzw. untere Abdeckwand bildet.

Mit vorderer Stirnwand ist die in Fahrtrichtung des Fahrzeugs vordere Stirnwand gemeint und mit hinterer Stirnwand, die Stirnwand, die zur Rückseite des Fahrzeugs zeigt.

Die erfindungsgemäße Radkastenverkleidung weist erfindungsgemäß wenigstens eine Lufteintrittsöffnung und wenigstens eine Luftaustrittsöffnung auf und wenigstens einen Lüfter oder Ventilator, mit Hilfe dessen Luft aus dem Laderaum in die Radkastenverkleidung eingesogen und durch die Luftaustrittsöffnung wieder ausgebracht werden kann, wodurch der Lüfter in der Lage ist, einen Luftstrom und damit eine Umwälzung der Luft im Laderaum zu erzeugen.

Die Radkastenverkleidung dient zur Abdeckung wenigstens eines Radkastens bzw. Radhauses der Räder der Hinterachse des Fahrzeugs, der bzw. das in den Laderaum vorsteht.

Vorteilhafterweise ist die vorliegende Erfindung sowohl für Transportfahrzeuge mit einer Klimaanlage als auch ohne geeignet. Ist keine Klimaanlage vorhanden, ergibt sich ein entsprechend eingeschränkter Temperaturbereich.

Durch die kastenförmige Struktur werden zusätzlich weitere Vorteile erreicht. Bekanntlich weisen Radkästen eine kreisbogenförmige Kontur im Laderaum der betrachteten Kraftfahrzeuge auf, welche verhindert, dass auf ihm Güter im Laderaum abgelegt werden können. Durch die erfindungsgemäße Radkastenverkleidung wird mittels der oberen Abdeckwand eine Ablagefläche geschaffen, auf der Transport- bzw. Ladegüter aufgestapelt werden können.

Weiterhin ergibt sich der Vorteil, dass durch die großflächige Seitenwand eine gerade und ebene Fläche geschaffen wird, an der die zu beladenden und entladenden Güter entlang geschoben werden können und nicht am Radkasten hängen bleiben. Wie bekannt, sind Lieferdienste, insbesondere Lieferverteildienste, wie dies bei Arzneimitteln oder sonstigen Paketen, verderblichen Produkten und dergleichen der Fall ist, einem großen Zeitdruck ausgesetzt und muss die Verteilung der Produkte, insbesondere der Arzneimittel so schnell wie möglich erfolgen. Aus diesem Grunde ist besonders vorteilhaft, wenn beim Be- und Entladen der Transportfahrzeuge die innere Struktur des Laderaums die schnelle Handhabung unterstützt. Zusätzlich ergibt sich der Vorteil, dass das Radhaus vor Beschädigungen geschützt werden kann.

Vorteilhafterweise ist der wenigstens eine Lüfter oder Ventilator an der Innenseite der Lufteintrittsöffnung angeordnet. Damit wird ein wirksames Einsaugen der Luft ermöglicht, wodurch die Luftumwälzung im Laderaum unterstützt wird.

Alternativ ist der wenigstens eine Lüfter oder Ventilator an der Luftaustrittsöffnung angeordnet. Damit wird ein wirksames Ausbringen der eingesaugten Luft in Form eines relativ gerichteten Luftstrahls ermöglicht, was die Luftumwälzung im Laderaum unterstützt.

In einer bevorzugten Ausführungsform befindet sich die wenigstens eine Luftaustrittsöffnung in der vorderen Stirnwand und der wenigstens eine Lüfter oder Ventilator bewegt die Luft in Richtung Frontseite des Fahrzeugs.

Alternativ kann sich die Luftaustrittsöffnung auch in der hinteren Stirnwand befinden, wodurch die Luft im Laderaum mittels des Lüfters von vorne nach hinten bewegbar ist.

Die Luftbewegung der erfindungsgemäßen Einrichtung erfolgt grundsätzlich entgegen der Richtung der Luftbewegung, die durch eine im Laderaum beispielsweise unterhalb dessen Himmels angeordnete Temperiereinrichtung mit ventilierender Funktion bzw. ein Kühl-Wärme-Ventilationssystem des Transportfahrzeugs erzeugt wird. Ist dieses hinter der Fahrerzelle angeordnet so wird die von dem Kühl-Wärme-Ventilationssystem in Richtung Heck des Fahrzeuges gerichtete Luft wieder unten nach vorne zurückgefördert und steigt anschließend zum Kühl-Wärme-Ventilationssystem auf. Ist das Kühl-Wärme-Ventilationssystem unterhalb des Himmels im Heckbereich der Fahrzeugs angeordnet, welches die Luft in Fahrtrichtung nach oben vorne bewegt, so fördert die erfindungsgemäße Einrichtung von unten vorne wieder nach hinten unten, wo die Luft wieder nach oben zum Kühl-Wärme-Ventilationssystem hochsteigt.

Das Kühl-Wärme-Ventilationssystem kann sich auch in einem mittleren oder unteren Bereich des Laderaums befinden.

Vorteilhafterweise ist in der einen alternativen Ausführungsform die wenigstens eine Lufteintrittsöffnung in der hinteren Stirnwand oder in der oberen Abdeckwand benachbart zur hinteren Stirnwand angeordnet, wodurch vorteilhafterweise die Luft im hintersten Bereich des Laderaums angesaugt wird und wieder nach vorne bewegt wird.

In der alternativen Ausführungsform ist die Lufteintrittsöffnung in der vorderen Stirnwand oder in der oberen Abdeckwand benachbart zur vorderen Stirnwand angeordnet, was dazu dient, die Luft von vorne nach hinten zu bewegen.

Vorteilhafterweise weist die Radkastenverkleidung der vorliegenden Erfindung eine Mehrzahl von Lufteintritts- und Luftaustrittsöffnungen sowie eine Mehrzahl von Lüftern und Ventilatoren auf, wodurch eine entsprechend große Luftmenge umgewälzt werden kann. Die Anzahl der Luftöffnungen und die Anzahl der Lüfter oder Ventilatoren bestimmt sich im Wesentlichen einerseits durch das Laderaumvolumen selbst und andererseits durch die Temperaturbedingungen, nämlich der Innentemperatur im Laderaum des Transportfahrzeugs und der herrschenden Außentemperatur. Je größer diese Unterschiede sind, desto schneller sollte die Luft im Laderaum umgewälzt werden können, um eventuell auftretende Temperaturunterschiede im Laderaum so schnell wie möglich wieder auszugleichen.

In einer alternativen Ausführungsform befindet sich zwischen der wenigstens einen Lufteintrittsöffnung und der wenigstens einen Luftaustrittsöffnung eine die Luft führende rohr- oder schlauchförmige Luftleitung, in der der wenigstens eine Lüfter oder Ventilator angeordnet ist. Dadurch kann ein besonders zielgerichteter Luftstrom in der Radkastenverkleidung erzeugt werden und durch die Geometrie der Radkastenverkleidung in Zusammenhang mit dem Radkasten selbst können etwaige auftretende Luftverwirbelungen, die eine Verlangsamung des Luftstroms einerseits und eine höhere Ventilator bzw. Lüfterleistung andererseits erfordern, verringert bzw. vermieden werden.

Vorteilhafterweise wird mittels des wenigstens einen Lüfters oder Ventilators je nach Ausführungsform eine Umwälzung der Luft im Laderaum von hinten nach vorne oder umgekehrt erzeugt, wodurch sich ein kontinuierlicher Luftstrom im Laderaum erzeugen lässt. In vielen Fällen befindet sich hinter der Fahrerzelle des Transportfahrzeugs unterhalb der Laderaumoberseite bzw. dem Laderaumhimmel das Kühl-Wärme-Ventilationssystem, durch das temperierte Luft in den Laderaum eingeblasen wird und zwar entlang der des Himmels des Laderaums nach hinten. Die nach hinten geblasene Luft wird somit aktiv wieder nach vorne zurückgeführt und erreicht erneut das Kühl-Wärme-Ventilationssystem, das gegebenenfalls eine weitere Temperierung der angesaugten Luft vor dem erneuten Ausstoß in den Laderaum vornimmt.

Durch die im gesamten Laderaum zwangsumgewälzte Luft werden alle Bereiche des Laderaums, insbesondere auch bei voll gefülltem Laderaum erreicht, wodurch "Temperaturnester", deren Temperatur außerhalb des einzustellenden Temperaturbereichs liegen, vermieden werden können und wodurch eine Vergleichmäßigung der Temperatur im Laderaum erreicht wird. Weiter wird erfindungsgemäß sichergestellt, dass nach einer Öffnung der Laderaumtür die temperierte Luft schnellstmöglich im Laderaum wieder verteilt wird.

Bei manchen mit Heiz-Klimaanlage ausgerüsteten Fahrzeugen befindet sich das Kühl-Wärme-Ventilationssystem im Heckbereich des Fahrzeugs oberhalb der Hecktür(en). Dann wird die Luft von der erfindungsgemäßen Einrichtung von vorne nach hinten befördert. Auch andere Anordnungen beispielsweise and der Seite sind denkbar.

Um zu verhindern, dass Fremdkörper in das Innere der Radkastenverkleidung eindringen können, kann in bzw. an der wenigstens einen Lufteintrittsöffnung und/oder in bzw. an der wenigstens Luftaustrittsöffnung eine Gittereinrichtung angeordnet sein.

Durch die vorliegende Erfindung soll insbesondere eine einfache und kostengünstige Einrichtung für Transportfahrzeuge geschaffen werden, mit der ein vorbestimmter konstanter Klimabereich von bevorzugt im Wesentlichen Raumtemperatur erzeugt werden kann. Die Erfindung findet Anwendung bei Transportfahrzeugen sowohl mit als auch ohne Kälte- und Wärmeanlage.

Vorteilhafterweise sind die Seitenwand, die obere Abdeckwand, die vordere Stirnwand und/oder die hintere Stirnwand aus einer beschichteten Holzwerkstoffplatte gebildet, was zudem den Vorteil eines geringen Gewichts der Radkastenverkleidung mit sich bringt. Dadurch wird die verfügbare Gewichtszuladung im Laderaum nur geringfügig eingeschränkt. Bei zusätzlicher Bodenwand ist diese vorteilhafterweise aus demselben Material gebildet. Alternative Materialien sind Platten aus Vollholz, Kunststoff, wie Duro- oder Thermoplaste, Polypropylen, GfK oder aus Metall.

Dadurch, dass die Radkastenverkleidung mit dem Boden des Laderaums des Kraftfahrzeugs verbunden ist, wird eine einfache und wirksame Verbindung der Radkastenverkleidung mit dem Transportfahrzeug erzeugt, und diese an einem Verrutschen im Laderaum gehindert. Die Verbindung kann darüber hinaus dem Luftabschluss nach unten in dem Fall dienen, in dem der Radkasten keinen eigenen Boden aufweist. Die Befestigung des Radkastens kann auf vielfältige Weise erfolgen, beispielsweise durch Verkleben mit geeigneten Klebern, durch Abdichten mittels Materialien wie Silikon, Akryl oder dergleichen bzw. auch durch Verwendung von Kompriband, mittels Bauteilen wie Winkelschienen oder Eckverbinder oder auch durch Formschlussverbindungen wie Nut und Feder, Zunge und zungenförmige Vertiefung und dergleichen.

Die vorliegende Erfindung umfasst auch ein Transportfahrzeug zum Transportieren von Gütern welches einen geschlossenen Laderaum aufweist, wobei die Güter in einem frei gewählten und/oder vorbestimmten Temperaturbereich, der einen maximalen Bereich von im Wesentlichen +2°C bis +30°C umfasst, transportiert werden sollen oder müssen, wobei es eine erfindungsgemäße Einrichtung nach einem der Ansprüche 1 bis 11 aufweist.

Unter Transportfahrzeug sind im Rahmen der Erfindung nicht nur Kraftfahrzeuge zu verstehen sondern auch nicht motorgetriebene Fahrzeuge, wie beispielsweise Hänger.

Weitere Einzelheiten, Merkmale und Vorteile der vorliegenden Erfindung ergeben sich aus der nachfolgenden Beschreibung unter Bezugnahme auf die beigefügten Zeichnungen. Darin zeigt:
- Fig. 1: eine explosionsartige Darstellung der erfindungsgemäßen Radkastenverkleidung, und zwar für den Radkasten des rechten Hinterrads;
- Fig. 2: zwei Radkastenverkleidungen für beide Radkästen der hinteren Räder des Transportfahrzeugs, wobei die einzelnen Wandelemente in die Ebene aufgeklappt sind;
- Fig. 3: eine schematische Seitenansicht einer ersten Ausführungsform eines Transportfahrzeugs mit in dessen Laderaum angeordnetem Radkasten und Darstellung des umgewälzten Luftstroms;
- Fig. 4a: eine Frontansicht eines Lüfters bzw. Ventilators zum Einsatz in der Radkastenverkleidung;
- Fig. 4b: eine Schnittansicht gemäß der Ebene des Pfeils A von Fig. 4a, und
- Fig. 5: eine Ansicht von hinten in den geöffneten Laderaum des Transportfahrzeugs von Fig. 3;
- Fig. 6: eine schematische Seitenansicht einer zweiten Ausführungsform eines Transportfahrzeugs mit in dessen Laderaum angeordnetem Radkasten und Darstellung des umgewälzten Luftstroms.

In den Figuren sind gleiche Elemente mit den gleichen Bezugsziffern bezeichnet.

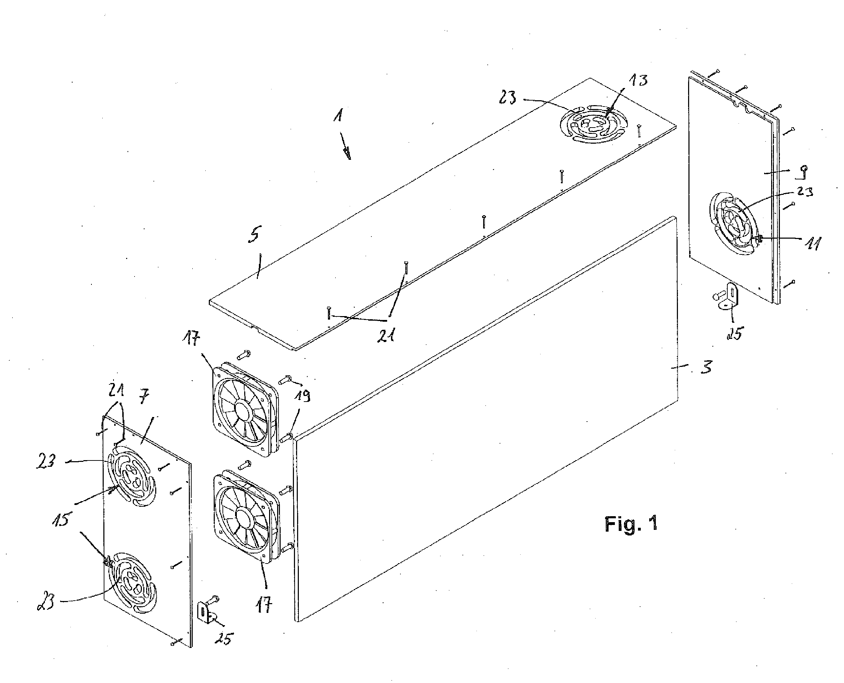

In Fig. 1 ist in Explosionsdarstellung eine erfindungsgemäße Radkastenverkleidung 1 dargestellt. Die Radkastenverkleidung weist eine Seitenwand 3, eine obere Abdeckwand 5, eine vordere Stirnwand 7 und eine hintere Stirnwand 9 auf. Die Wandelemente 3, 5, 7 und 9 können auf einfache und auf vielfache Weise, beispielsweise durch Schrauben oder Nägel 21, Dübel, Verklinkungen wie Nut und Feder, Zunge oder zungenförmige Vertiefung, durch Kleben, Abdichten und Bauteile, wie Winkel oder Ecken miteinander verbunden werden.

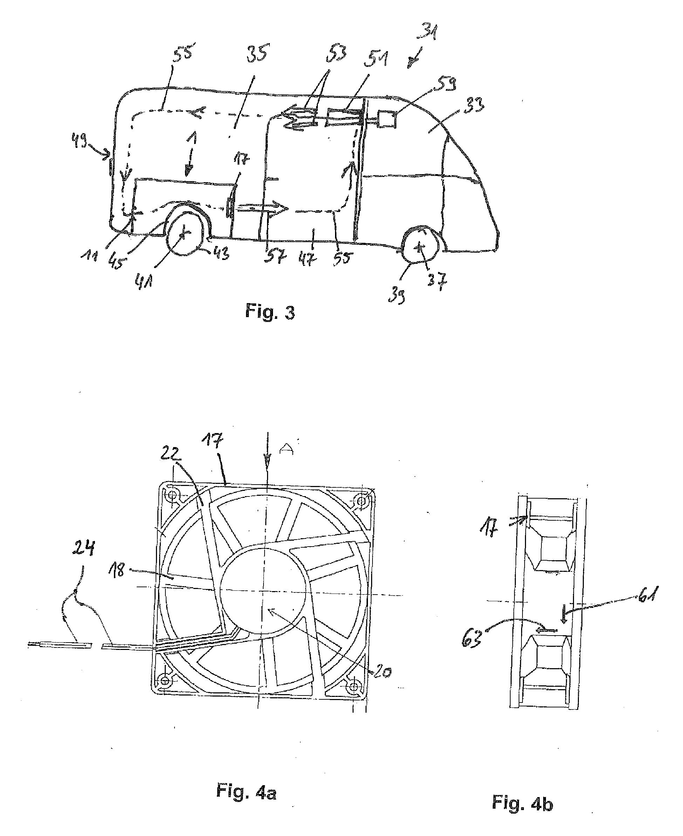

Wie aus Fig. 1 ersichtlich, weist die vordere Stirnwand 7 zwei Luftaustrittsöffnungen 15 auf, die übereinander angeordnet sind, und an die von der Innenseite der vorderen Stirnwand 7 je Luftaustrittsöffnung 15 ein Lüfter bzw. Ventilator 17 mittels Schrauben 19 oder andere geeignete Befestigungsmittel befestigt ist. Die Lüfter 17 werden weiter unten unter Bezugnahme auf die Fig. 4a und 4b näher beschrieben.

Im unteren Bereich der hinteren Stirnwand 9 ist eine Lufteintrittsöffnung 11 vorgesehen und im Bereich benachbart zur hinteren Stirnwand 9 ist in der oberen Abdeckwand 5 ebenfalls eine Lufteintrittsöffnung 13 vorgesehen. Die Lufteintrittsöffnungen 11 und 13 sowie die Luftaustrittsöffnungen 15 sind mit Gittereinrichtungen 23 versehen, die verhindern sollen, dass Fremdkörper sowohl in das Innere der Radkastenverkleidung 1 eindringen können, als auch die Lüfter 17 beschädigen können.

Wie aus Fig. 1 ersichtlich, weist die Radkastenverkleidung 1 eine denkbar einfache Gestalt auf, wobei der große Vorteil besteht, dass die einzelnen Elemente, Seitenwand, obere Abdeckwand, vordere und hintere Stirnwand aus einfachen Platten gebildet werden können, die aus einer entsprechenden Standardplattengröße zugeschnitten werden und die Platten einerseits bevorzugt aus zumindest außenseitig beschichteten Holzwerkstoffen, wie Sperrholz, bestehen können, wobei durch den flexiblen Zuschnitt eine Anpassung an praktisch alle Transportfahrzeugtypen möglich ist. Bei besonders großen Transportfahrzeugen kann es auch vorkommen, dass eine doppelte Hinterachse vorgesehen ist, sodass zwei Radkästen auf jeder Seite des Fahrzeugs vorhanden sind, die mit einer entsprechend langen Radkastenverkleidung verkleidet werden können.

In einer einfachen Ausführungsform sind wenigstens eine Eintrittsöffnung, beispielsweise die Eintrittsöffnung 11 in der hinteren Stirnwand und eine Austrittsöffnung 15 mit einem Lüfter 17 vorgesehen. Im dargestellten Ausführungsbeispiel gemäß Fig. 1 gibt es zwei Lufteintrittsöffnungen 11 und 13, zwei Luftaustrittsöffnungen 15 mit zugeordneten Lüftern 17. Wie ersichtlich, ist damit der Aufbau der Radkastenverkleidung entsprechend flexibel an die Luftumwälzaufgabe anpassbar, indem weitere Lüfter vorgesehen werden können, die die durch mehrere Lufteintrittsöffnungen eingesaugte Luft ebenfalls über eine entsprechende Vielzahl von Luftaustrittöffnungen umwälzen.

Wie weiterhin ersichtlich, kann die obere Abdeckwand 5 besonders gut als Abstützfläche zumindest in den Abschnitten, in denen keine Lufteintrittsöffnung 13 vorhanden ist, für zu lagernde Gegenstände dienen.

Als Materialalternativen können neben Holzwerkstoffen, auch Platten aus Vollholz, Kunststoff, wie Duro- oder Thermoplaste, Polypropylen, GfK oder auch aus Metall verwendet werden. Entsprechende Verbundmaterialien sind selbstverständlich auch möglich.

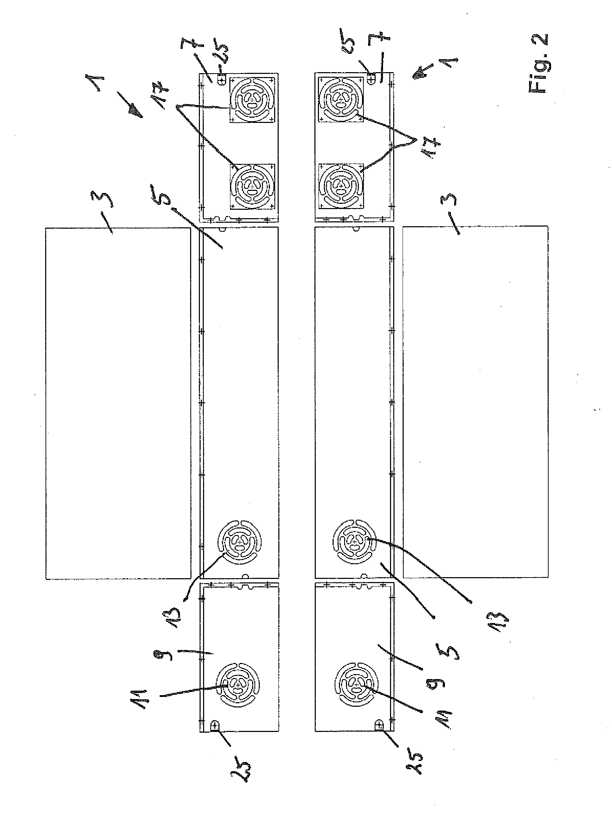

In Fig. 2 sind zwei Radkastenverkleidungen 1 in spiegelbildlicher aufgeklappter Ansicht für die beiden Radkästen im Lagerraum eines Transportfahrzeugs dargestellt, wobei es sich um die Ansicht von den Innenseiten der jeweiligen Radkastenverkleidung 1 handelt. So dient die obere Radkastenverkleidung 1 für die Verkleidung des linken, fahrerseitigen Radkastens und die untere Radkastenverkleidung 1 für den Radkasten der rechten Seite bzw. Beifahrerseite des Fahrzeugs.

Wie in Fig. 1 angedeutet und auch in Fig. 2 ersichtlich, sind Winkelschienen 25 vorgesehen, die durch entsprechendes Verschrauben sowohl mit den Stirnwänden 7 bzw. 9 als auch mit dem Boden des Transportfahrzeugs die Radkastenverkleidung 1 im Laderaum lagern kann und ein Verrutschen von ihr verhindern.

Es wird nunmehr Bezug genommen auf die Fig. 3, die - sehr schematisch - ein Transportfahrzeug darstellt, das in üblicher Weise eine Fahrerzelle 33 und einen Laderaum 35 aufweist. In üblicher Weise weist das Transportfahrzeug 31 eine Vorderachse 37 mit Vorderrädern 39 und eine Hinterachse 41 mit Hinterrädern 43 auf.

Um die Hinterräder 43 erstreckt sich in üblicher Weise auf jeder Seite des Fahrzeugs ein Radkasten 45, der in das Innere des Laderaums 35 vorspringt. Um diesen Radkasten 45 ist die erfindungsgemäße Radkastenverkleidung 1 angeordnet.

Der Laderaum 35 ist seitlich zugänglich durch eine Seitentür 47 und von hinten zugänglich durch in an sich bekannter Weise angeordnete Flügeltüren 49.

Hinter der Fahrerzelle 33, die gegenüber dem Laderaum 35 durch eine Trennwand abgetrennt ist, befindet sich eine Temperiereinrichtung mit ventilierender Funktion bzw. ein Kühl-Wärme-Ventilationssystem 51 einer Kälte- und Wärmeanlage mit elektronischer Temperaturregelung (nicht dargestellt), welche die aus dem Laderaum angesaugte Luft entsprechend ihrer Voreinstellung temperiert und nach hinten in den Laderaum gemäß den Pfeilen 53 ausbläst. Die Einspeisevorrichtung ist sowohl mit einer Heizanlage als auch mit einer Kühlanlage, beispielsweise einer Klimaanlage des Fahrzeugs verbunden. Diese angesaugte Luft nimmt dann im Wesentlichen einen Weg ein, wie er mit der gestrichelten Linie 55 angedeutet ist.

Durch die Lufteintrittsöffnung 11 wird mittels des Lüfters 17 auf der gegenüberliegenden Seite dadurch Laderaumluft angesaugt, dass der Lüfter die in der Radkastenverkleidung 1 befindliche Luft gemäß Pfeil 57 nach vorne in Richtung der Fahrerzelle 33 ausbläst. Dadurch entsteht im Innenraum der Radkastenverkleidung 1 ein Unterdruck, der durch die Luft aus dem Laderaum 35 durch Eintritt durch die Lufteintrittsöffnung 11 wieder ausgeglichen wird.

Wie aus Fig. 3 ersichtlich, ergibt sich somit eine Umwälzung der Luft im Laderaum, was zu einer Vergleichmäßigung der Temperatur im Laderaum führt, sodass der gesamte Laderaum sich im gewünschten Temperaturbereich befindet und die darin gelagerten Güter, insbesondere auch Arzneimittel, sich stets im gewünschten Temperaturbereich befinden.

Mit 59 wird eine Klimazusatzeinrichtung bezeichnet, die ebenfalls von dem KühlWärme-Ventilationssystem 51 versorgt wird und eine entsprechende Temperierung der Fahrerzelle 33 ermöglicht.

Es wird nunmehr Bezug genommen auf die Fig. 4a und 4b, die schematisch einen Lüfter bzw. Ventilator 17 in Rückansicht (Fig. 4a) bzw. in Ansicht gemäß Ebene des Pfeiles A von Fig. 4a in Fig. 4b zeigen. Der Lüfter 17 weist in herkömmlicher Weise ein Lüfterrad 18 auf, das auf einer Nabe 20 gelagert ist, auf der sich auch ein Motor (nicht dargestellt) befindet. Die Nabe 20 ist ihrerseits in einem Rahmen 22 gelagert. Mittels einer elektrischen Leitung 24 wird der Motor 20 zum Antrieb des Lüfterrads 18 gespeist.

In Fig. 4b sind dann mit Pfeil 61 die Drehrichtung des Lüfterrads 18 und mit Pfeil 63 die Luftdurchflussrichtung angedeutet.

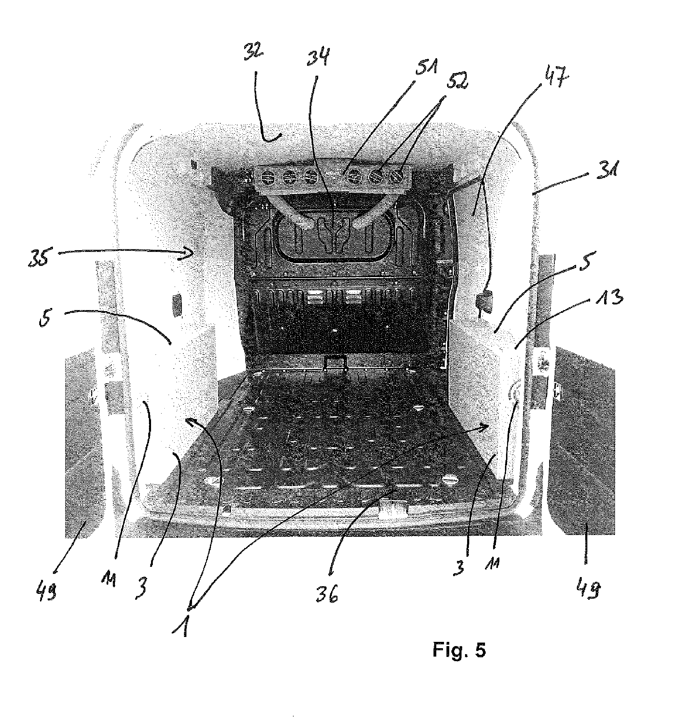

In Fig. 5 ist eine Ansicht in den Laderaum 35 eines Transportfahrzeugs 31 bei geöffneten Flügeltüren 49 und geschlossener Seitentür 47 gezeigt. Wie ersichtlich, befindet sich zwischen Fahrerzelle 33 und Laderaum 35 eine Trennwand 34. Unterhalb der Oberseite 32 des Transportfahrzeugs 31 befindet sich das Kühl-WärmeVentilationssystem 51 mit Lüftungsschlitzen bzw. Lüftungsöffnungen 52, durch die temperierte Laderaumluft in Richtung hinterer Flügeltüren 49 geblasen wird.

Über dem linken und rechten Radkasten der Hinterachse des Transportfahrzeugs 31 ist je eine erfindungsgemäße Radkastenverkleidung 1 angebracht, wobei die Ausführungsform der erfindungsgemäßen Radkastenverkleidung 1 der nach der Fig. 1 und 2 entspricht.

Im dargestellten Beispielsfalle ist ein Laderaumboden 36 dargestellt, der dem werkseitig vom Kraftfahrzeughersteller versehenen Boden entspricht. Alternativ kann zur besseren Bewegbarkeit der zu beladenden und entladenden Güter eine eine glatte, ebene Oberfläche aufweisende Bodenaufsatzplatte, gegebenenfalls mehrteilig, vorgesehen sein, die beispielsweise aus dem selben Material wie die Radkastenverkleidung 1 gebildet ist.

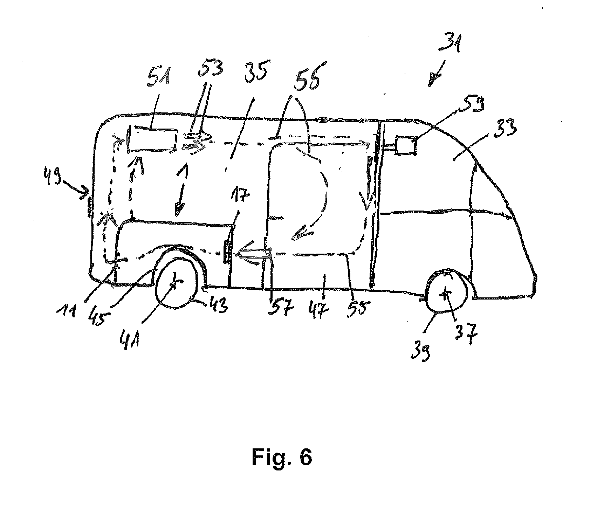

Fig. 6 zeigt eine alternative Ausführungsform zu jener von Fig. 3. Diese alternative Ausführungsform unterscheidet sich von jener gemäß Fig. 3 dadurch, dass sich das Kühl-Wärme-Ventilationssystem 51 im oberen Heckbereich des Laderaums 35 befindet und die gegebenenfalls temperierte Luft in Richtung Fahrerzelle 33 ausstößt. Dadurch ergibt sich ein zur Ausführungsform gemäß Fig. 3 umgekehrter Strömungsweg 55 und die umgewälzte Luft strömt in die Radkastenverkleidung/en 1 gemäß Pfeil 57. Die in der Radkastenverkleidung 1 beschleunigte Luft strömt dann entlang der heckseitigen Flügeltüren 49 wieder nach oben und erreicht erneut das Kühl-Wärme-Ventilationssystem 51.

Die vorliegende Erfindung ist nicht auf die dargestellten Ausführungsvarianten beschränkt. So könnte das Kühl-Wärme-Ventilationssystem seitlich unten im Bereich eines Radkastens bzw. im Bereich beider Radkästen, über den Köpfen von Fahrer und Beifahrer, Auf Dach oder Unterflur angeordnet sein.

Mit der vorliegenden Erfindung wird somit auf einfache Weise eine Einrichtung in Form einer Radkastenverkleidung 1 geschaffen, mit der die in einem Laderaum vorhandene Luft auf wirksame Weise umgewälzt werden kann, wodurch eine Temperaturvergleichmäßigung im Laderaum erzeugt wird und ein vorbestimmter Temperaturbereich, beispielsweise +15 °C bis +25 °C für nicht kühlbedürftige Arzneimittel, sicher gehalten werden kann, was den Betriebsbedingungen der neuen EU-Richtlinie "Good Distribution Practice" zum Transport von Arzneimitteln entspricht. Auch andere verderbliche, jedoch nicht kühlbedürftige Güter, wie Blumen oder Schokolade und Pralinen können mit dem so ausgestatteten Transportfahrzeug sicher transportiert werden. Grundsätzlich schafft die vorliegende Erfindung die Möglichkeit, mit einfachen Mitteln einen Transport von Gütern bei Raumtemperatur sicherzustellen.

Die Wirksamkeit dieser Luftumwälzung hat sich auch unter extremen Betriebsbedingungen, also einerseits bei strengem Frost und häufigem Öffnen der Laderaumtüren in Simulation einer Arzneimittelverteilung an die einzelnen Apotheken, als auch bei extremer Sommerhitze dauerhaft bewährt.

Vorteilhafterweise kann die erfindungsgemäße Radkastenverkleidung auch nachträglich in bereits für derartige Transporte verwendete Fahrzeuge eingebaut werden.

### Bezugszeichenliste

1 - Radkastenverkleidung
3 - Seitenwand
5 - obere Abdeckwand
7 - vordere Stirnwand
9 - hintere Stirnwand
11 - Lufteintrittsöffnung
13 - Lufteintrittsöffnung
15 - Luftaustrittsöffnung
17 - Lüfter bzw. Ventilator
18 - Lüfterrad
19 - Schrauben
20 - Nabe
21 - Schrauben oder Nägel
22 - Rahmen
23 - Gittereinrichtung
25 - Winkelschiene
31 - Transportfahrzeug
32 - Oberseite bzw. Laderaumdecke
33 - Fahrerzelle
34 - Trennwand
35 - Laderaum
36 - Laderaumboden
37 - Vorderachse
39 - Vorderräder
41 - Hinterachse
43 - Hinterräder
45 - Radkasten
47 - Seitentür
49 - Flügeltüren
51 - Temperiereinrichtung mit ventilierender Funktion bzw. Kühl-Wärme-Ventilationssystem
52 - Lüftungsöffnungen
53 - Pfeile
55 - Weg
57 - Pfeil
59 - Klimazusatzeinrichtung
61 - Pfeil
63 - Pfeil

## Patentansprüche

1. Einrichtung zur Vergleichmäßigung der Temperaturverteilung in einem geschlossenen Laderaum (35) eines Kraft- bzw. Transportfahrzeugs (31), welches zum Transport von Gütern dient, die in einem frei gewählten und/oder vorbestimmten konstanten Temperaturbereich, der einen maximalen Bereich von im Wesentlichen +2°C bis +30°C umfasst, transportiert werden sollen oder müssen,
**dadurch gekennzeichnet,**
**dass** sie die Form einer Radkasten- bzw. Radhausverkleidung (1) für einen bzw. ein sich im Laderaum (35) des Kraft- bzw. Transportfahrzeugs (31) befindlichen Radkasten bzw. Radhaus aufweist, die eine Seitenwand (3), eine obere Abdeckwand (5), eine vordere Stirnwand (7) und eine hintere Stirnwand (9), wenigstens eine Lufteintrittsöffnung (11) und wenigstens eine Luftaustrittsöffnung (15), und wenigstens einen Lüfter oder Ventilator (17) aufweist, der sich in oder an der Luftaustrittsöffnung (15) befindet und zur Umwälzung der Luft im Laderaum dient.

2. Einrichtung nach Anspruch 1, **dadurch gekennzeichnet, dass** der wenigstens eine Lüfter oder Ventilator (17) an der Innenseite der Stirnwand im Bereich Luftaustrittsöffnung (15) angeordnet ist.

3. Einrichtung nach Anspruch 1 oder 2, **dadurch gekennzeichnet, dass** die wenigstens eine Luftaustrittsöffnung (15) sich in der vorderen oder der hinteren Stirnwand (7, 9) befindet.

4. Einrichtung nach einem der Ansprüche 1 bis 3, **dadurch gekennzeichnet, dass** die wenigstens eine Lufteintrittsöffnung (11; 13) in einer der beiden Stirnwände (7, 9), in der die Luftaustrittsöffnung (15) nicht angeordnet ist, oder in der oberen Abdeckwand (5) benachbart zu einer der beiden Stirnwände (7, 9), in der die Luftaustrittsöffnung (15) nicht angeordnet ist, angeordnet ist.

5. Einrichtung nach einem der Ansprüche 1 bis 4, **dadurch gekennzeichnet, dass** der wenigstens eine Lüfter oder Ventilator (17) sich im Bereich der Lufteintrittsöffnung oder im Bereich der Luftaustrittsöffnung befindet

6. Einrichtung nach einem der Ansprüche 1 bis 5, **dadurch gekennzeichnet, dass** sie eine Mehrzahl von Lufteintritts- und Luftaustrittsöffnungen sowie eine Mehrzahl von Lüftern oder Ventilatoren aufweist.

7. Einrichtung nach einem der Ansprüche 1 bis 6, **dadurch gekennzeichnet, dass** zwischen der wenigstens einen Lufteintrittsöffnung (11; 13) und der wenigstens einen Luftaustrittsöffnung (15) eine die Luft führende, rohr- oder schlauchförmige Luftleitung vorgesehen ist, wobei der wenigstens eine Lüfter oder Ventilator sich in der Luftleitung befindet.

8. Einrichtung nach einem der Ansprüche 1 bis 7, **dadurch gekennzeichnet, dass** mittels des wenigstens einen Lüfters oder Ventilators (17) eine Umwälzung der Luft im Laderaum (35) von hinten unten nach vorne unten oder von vorne unten nach hinten unten erzeugt wird.

9. Einrichtung nach einem der Ansprüche 1 bis 8, **dadurch gekennzeichnet, dass** in bzw. an der wenigstens einen Lufteintrittsöffnung und/oder in bzw. an der wenigstens einen Luftaustrittsöffnung eine Gittereinrichtung (23) angeordnet ist.

10. Einrichtung nach einem der Ansprüche 1 bis 9, **dadurch gekennzeichnet, dass** die Seitenwand, die obere Abdeckwand, die vordere Stirnwand und/oder die hintere Stirnwand aus einer beschichteten Holzwerkstoffplatte, oder aus Platten aus Vollholz, Kunststoff, wie Duro- oder Thermoplaste, Polypropylen, GfK oder aus Metall gebildet sind.

11. Einrichtung nach einem der Ansprüche 1 bis 10, **dadurch gekennzeichnet, dass** sie mit dem Boden (36) des Laderaums (35) des Kraftfahrzeugs (31) verbunden ist.

12. Einrichtung nach Anspruch 11, **dadurch gekennzeichnet, dass** die Verbindung durch Verkleben mit geeigneten Klebern, durch Abdichten mittels Materialien wie Silikon, Akryl oder dergleichen bzw. auch durch Verwendung von Kompriband, und/oder mittels Bauteilen wie Winkelschienen (25) oder Eckverbinder oder auch durch Formschlussverbindungen wie Nut und Feder, Zunge und zungenförmige Vertiefung und dergleichen erfolgt.

13. Transportfahrzeug (31) zum Transportieren von Gütern welches einen geschlossenen Laderaum (35) aufweist, wobei die Güter in einem frei gewählten und/oder vorbestimmten konstanten Temperaturbereich, der einen maximalen Bereich von im Wesentlichen +2°C bis +30°C umfasst, transportiert werden sollen oder müssen, **dadurch gekennzeichnet, dass** es eine Einrichtung nach einem der Ansprüche 1 bis 12 aufweist.
